# EUROPEAN PATENT SPECIFICATION

(11) **EP 1 283 183 B1**
(45) Date of publication and mention of the grant of the patent: **19.05.2004**
(21) Application number: 02016192.3
(22) Date of filing: 22.07.2002
(51) Int. Cl.: B65G 47/14

(54) **Machine to orderly feeding of lollipops**
Maschine zum ordnungsgemässem Zuführen von Lutschbonbons
Machine à acheminer des sucettes de manière ordonnée

(30) Priority: 07.08.2001 IT MI20011736
(43) Date of publication of application: 12.02.2003
(73) Proprietor: EUROSICMA S.p.A., 20125 Milano (IT)
(72) Inventor: Redaelli, Marco, 20060 Cassina De Pecchi (MI) (IT)
(74) Representative: Faraggiana, Vittorio, Dr. Ing.

(56) References cited:
- EP-A- 0 036 282
- EP-A- 1 041 005
- US-A- 5 450 706

## Description

The present invention relates to a machine for the orderly supply of confectionery of the drop lollypop type.

In the automatic packaging of products to form belts of products it is essential that the feeding of products to the packaging machine be perfectly regular. In the case of products of the lollypop type it is also quite as essential that defective products without the stick or sticks without the candy be rejected before packaging and without leaving empty positions in the supplied line. This makes automatic feeding particularly difficult in general for lollypop type products and in particular for the type with a sweet in the form of a drop, manual feeding is preferred.

Document US 5 450 706 discloses a lollypops feeding machine according to the preamble of claim 1.

The general purpose of the present invention is to remedy the above mentioned shortcomings by making available an automatic machine for the feeding of drop lollypops which would ensure regular feeding of the product with precautionary rejection of defective products.

In view of this purpose it was sought to provide in accordance with the present invention a machine for feeding in an orderly row products consisting of drop lollypops to a packaging machine comprising a hopper dumping the products onto a rotating disk having radially arranged cavities spaced for each to receive the drop of a lollypop and with radial opening to receive and cause to project outward the sticks of the lollypops in the cavities with there being between zones of insertion of the products into the cavities and an outlet zone on the outside of the disk guides for running support of the products by means of the stick and the cavities being open below so that the products without sticks fall from the respective cavity to free it and are rejected before reaching the outlet zone.

To clarify the explanation of the innovative principles of the present invention and its advantages compared with the prior art there is described below with the aid of the annexed drawings a possible embodiment thereof by way of non-limiting example applying said principles. In the drawings -
FIG 1 shows a diagrammatic plan view of the feeding machine associated with a packaging machine,

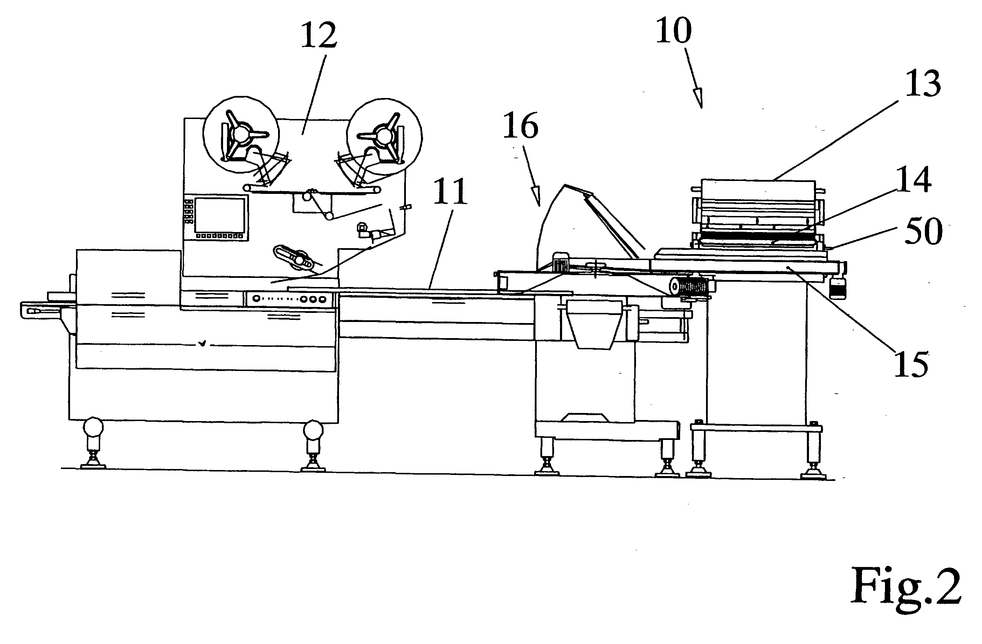

FIG 2 shows a side elevation view of the machine of FIG 1,
FIG 3 shows an enlarged plan view of a sorting part of the machine of FIG 1,
FIG 4 shows a partial perspective view of the part of FIG 3,
FIG 5 shows a partial perspective view of an outlet zone for ordered products,
FIG 6 shows a diagrammatic cross section view along plane of cut VI-VI of FIG 3, and
FIG 7 shows a diagrammatic cross section along plane of cut VII-VII of FIG 3.

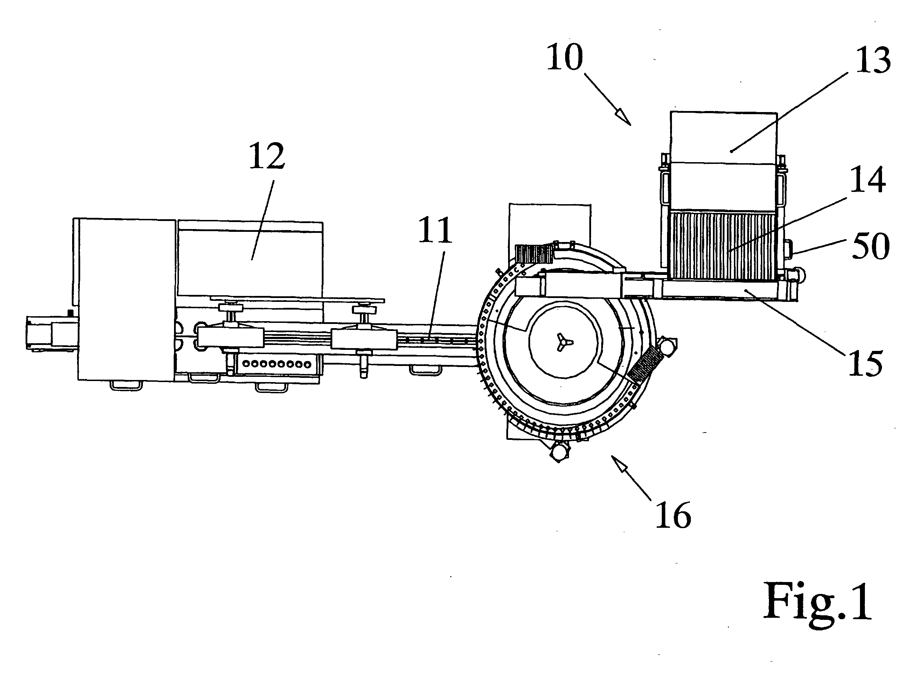

With reference to the FIGS, FIG 1 shows a feeding machine designated as a whole by reference number 10 realized in accordance with the principles of the present invention. The machine has an outlet conveyor 11 on which run the products in an orderly row to feed a packaging machine 12 of the flowpack type of the prior art and therefore not further described nor shown from which the products exit packed in a continuous strip.

The feeder 10 comprises a filling hopper 13 where the product consisting of spherical lollypops is loaded haphazardly. From the hopper the products fall onto a vibrating table 14 consisting of a structure made of parallel stainless steel tubes arranged longitudinally to the direction of advance of the product and which are positioned with an appropriate pitch less than the diameter of the spheres of the lollypops by enough for passage of the sticks. In this manner sticks without candy fall through the tubes and are collected in a tray 50.

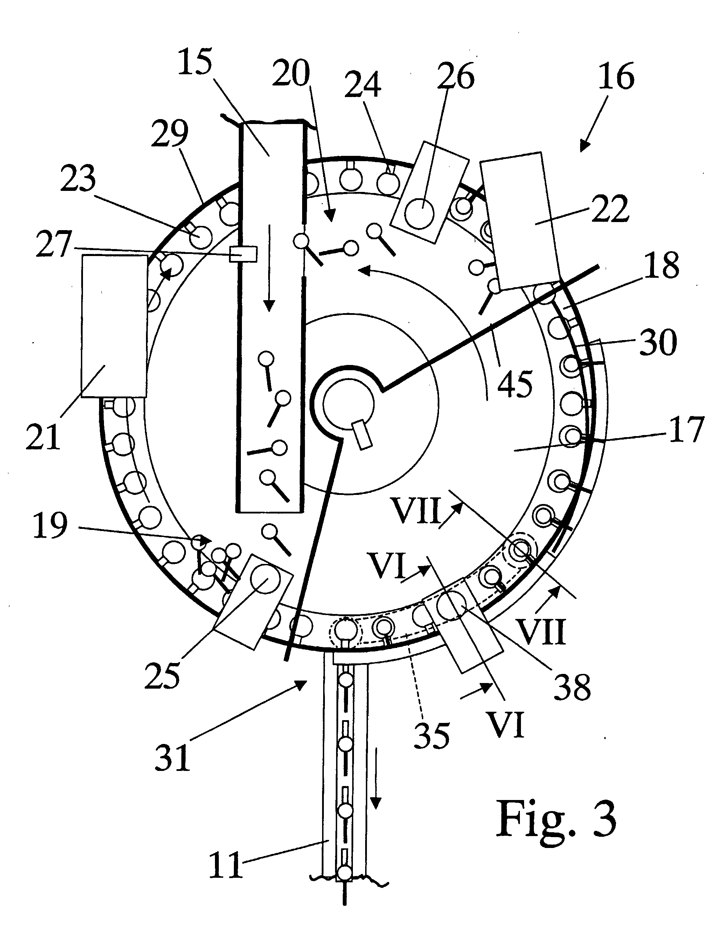

The products which reach the end of the vibrating table 14 fall onto a feeding conveyor belt 15 which conveyances them to a rotating disk sorting device 16 shown in greater detail on FIG 3.

The sorting device 16 comprises a central tapered disk 17 and a peripheral disk or rim 18 for conveyance. The rim rotates in the direction of conveyance between the arrival zones of the products falling from the conveyor 15 and the deposit zone on the radial outlet conveyor 11. The central disk 17 rotates in the opposite direction. This facilitates distribution of the product long the entire periphery of the conveyor disk. The external disk 18 has cavities 23 which represent the seats in which is received the candy of the lollypops. Each cavity has a radial opening 24 directed toward the exterior of the disk and from which projects the stick of the lollypop received in the cavity.

The products are dumped onto the disk in two spaced zones 19, 20. Near the two zones (downstream of the disk conveyor path) there are two rotating brushes 21, 22 arranged on the edge of the disk to facilitate loading of the products into the cavities. A bulkhead 45 separates dump zones and conveyance zone toward the outlet.

The two dump zones realize two storage units which facilitate filling of the cavities. Sensors 25, 26 detect the quantity of products in the two zones and call down product when it begins to be scarce. To do this the machine comprises means of regulation of the quantity of product fed into said zones which are controlled by the sensors to hold said quantity above a predetermined minimum. The first zone 19 is replenished by increase in vibration of the hopper in such a manner that a larger number of products reaches the end of the conveyor 15. The second zone 20 is fed by the operation of an air blowing device 27 which deflects the product onto the chute to make it fall from the side opening 28.

Once the product is inserted with the candy in a cavity, appropriate guides 29, 30 orient the stick to have it accommodated in the radial opening of the cavity.

The products continue thus to the outlet position 31.

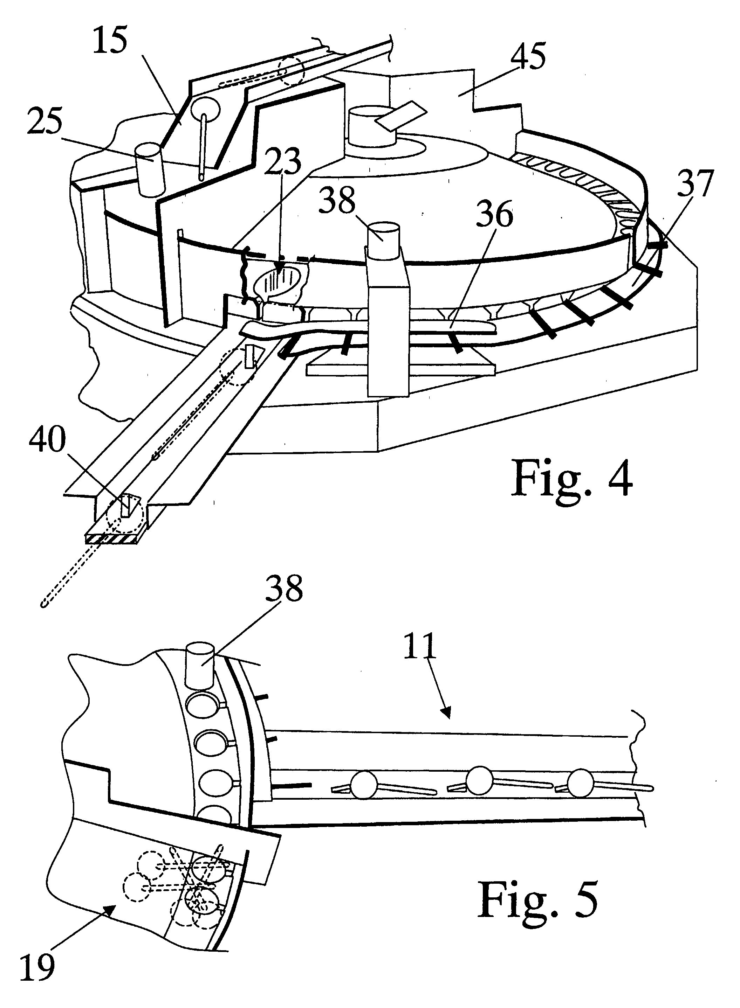

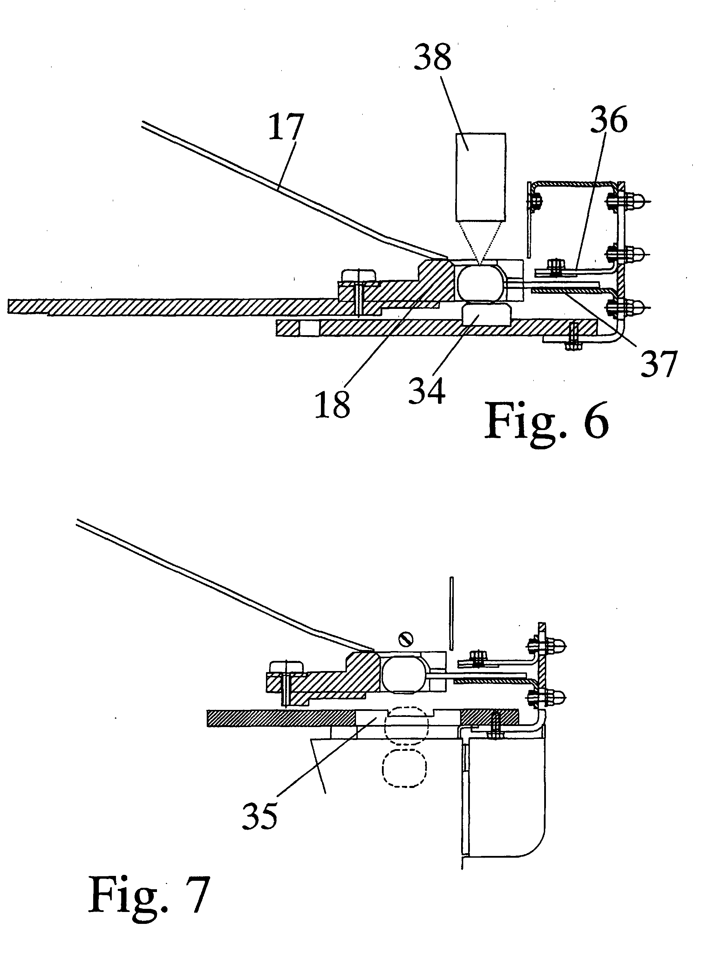

As may be seen in FIG 6 the cavities 23 are open below and falling of the product is prevented by a fixed surface 34 below. The surface is missing in a section 35 of the conveyor path and in this section (as shown in FIG 7 and quite visible also in FIG 4) outside the disk are a pair of superimposed guides 36, 37 between which is inserted the stick projecting from the cavity. For the entire last section of travel the lollypop is therefore supported in the cavity thanks only to the stick. In this manner a lollypop without a stick falls from the disk into a collection container below to free the corresponding cavity. A sensor 38 detects passage of an empty cavity and commands the motor rotating the external disk to accelerate and recover the empty position when the cavity passes from the dump position 31. In other words, the disk temporarily increases speed and them slows again so that the next full cavity dumps the product at the outlet instead of the empty cavity. The products are thus always equally spaced on the outlet conveyor 11.

As may be seen in FIG 4, for dumping the product the lower guide 37 terminates when it arrives over the conveyor so that the product with the stick no longer supported falls onto the conveyor 11 below. The conveyor comprises advantageously pushers 40 (synchronized with the cavities) which project above to push the lollypop from behind the drop. This was found advantageous because the pushing from behind tends to cause rolling of the drop and pushing of the stick downward. In addition, it is possible for example to insert under the lollypop a packaging cardboard, a label sheet or a prize picture-card without interfering with the feeding process.

It is now clear that the predetermined purposes have been achieved by making available a machine ensuring correct and rapid sequential feeding of lollypops with elimination of defective products and holding of the product outlet frequency at a constant value predetermined and very high, even 400 packages per minute.

Naturally the above description of an embodiment applying the innovative principles of the present invention is given by way of non-limiting example of said principles within the scope of the exclusive right claimed here.

For example the packaging machine could be a different type from the one shown diagrammatically.

## Claims

1. Machine (10) for feeding in an orderly row products consisting of drop lollypops to a packaging machine comprising a hopper (13) dumping the products onto a rotating disk (18) having radially arranged cavities (23) spaced for each to receive the drop of a lollypop and with radial opening (24) to receive and cause to project outward the sticks of the lollypops in the cavities (23), **characterized in that** guides (36, 37) for running support of the lollypops by means of the stick are disposed on the outside of the disk between zones of insertion of the lollypops into the cavities and an outlet zone and **in that** the cavities (23) are open below so that the lollypops without sticks fall from the respective cavity (23) to free it and are rejected before reaching the outlet zone.

2. Machine in accordance with claim 1 **characterized in that** before the outlet zone there is a sensor (38) which detects the lack of lollypops in a cavity and commands rotation of the disk to recover the empty position and hold product outlet frequency constant.

3. Machine in accordance with claim 1 **characterized in that** in the outlet zone the guides free the sticks and the lollypops fall in an orderly manner and sequentially onto a conveyor (11) which abandons the disk radially to carry the lollypops to the packaging machine.

4. Machine in accordance with claim 3 **characterized in that** the conveyor has spaced pushers (40) designed to rest from behind against the drop of a lollypop deposited on the conveyor with the stick forward.

5. Machine in accordance with claim 1 **characterized in that** the rotating disk (18) projects radially from a tapered disk (17) arranged above it and rotating in the opposite direction.

6. Machine in accordance with claim 1 **characterized in that** the hopper dumps on the disk with interposition of a vibrating table (14) realized with parallel and spaced members arranged parallel to the direction of conveyance of the lollypops on the table and with distance greater than the thickness of the stick but less than the diameter of the drop in such a manner that sticks without a drop fall through the vibrating table (14) and are rejected.

7. Machine in accordance with claim 1 **characterized in that** the lollypops are dumped on the disk in two different zones (19, 20) spaced from each other.

8. Machine in accordance with claim 7 **characterized in that** in the two zones (19, 20) there are sensors (25, 26) which detect the presence of lollypops and the machine comprises means of adjustment of the quantity of lollypops fed into said zones to hold said quantity above a predetermined minimum.

9. Machine in accordance with claim 8 **characterized in that** the lollypops reach the first zone (19) by means of a conveyor which ends near said first zone and reach the second zone (20) by means of a side opening in said conveyor and the adjustment means comprise an increase in the vibration of the hopper so that a greater number of lollypops reaches the end of the conveyor and an air blowing device (27) which diverts the lollypops onto the conveyor to make it fall from said side opening.

## Patentansprüche

1. Maschine (10) zum Zuführen von aus Lutschern (Lollypops) in Tropfenform bestehenden Produkten in einer geordneten Reihe zu einer Verpackungsmaschine, welche einen Trichter (13) aufweist, der die Produkte auf eine rotierende Scheibe (18) mit radial angeordneten Hohlräumen (23) ablädt, die beabstandet sind, damit jeder den Tropfen eines Lutschers aufnimmt, und mit einer radialen Öffnung (24) versehen sind, um die Stiele der Lutscher in den Hohlräumen (23) aufzunehmen und diese nach außen ragen zu lassen, **dadurch gekennzeichnet, daß** Führungen (36, 37) für eine laufende Unterstützung der Lutscher mittels des Stiels an der Außenseite der Scheibe vorhanden sind, zwischen Einführungszonen der Lutscher in die Hohlräume und einer Auslaßzone und daß die Hohlräume (23) unten offen sind, so daß die Lutscher ohne Stiele aus dem entsprechenden Hohlraum (23) herausfallen zur Freigabe und zurückgewiesen werden, bevor sie die Auslaßzone erreichen.

2. Maschine nach Anspruch 1, **dadurch gekennzeichnet, daß** sich vor der Auslaßzone ein Sensor (38) befindet, welcher das Fehlen von Lutschern in einen Hohlraum detektiert und die Rotation der Scheibe befiehlt, um die leere Position wieder aufzufüllen und die Produktauslaßfrequenz konstant zu halten.

3. Maschine nach Anspruch 1, **dadurch gekennzeichnet, daß** in der Auslaßzone die Führungen die Stiele freigeben und die Lutscher in einer geordneten Weise und nacheinander auf eine Fördereinrichtung (11) fallen, welche die Scheibe radial verläßt, um die Lutscher zu der Verpackungsmaschine zu transportieren.

4. Maschine nach Anspruch 3, **dadurch gekennzeichnet, daß** die Fördereinrichtung beabstandete Schiebeeinrichtungen (40) besitzt, welche dafür ausgelegt sind, von hinten an dem Tropfen eines auf der Förderbandeinrichtung mit dem Stiel nach vorne abgelegten Lutschers anzuliegen.

5. Maschine nach Anspruch 1, **dadurch gekennzeichnet, daß** die rotierende Scheibe (18) radial von einer konisch zulaufenden Scheibe (17), welche darüber angeordnet und sich in entgegengesetzter Richtung dreht, hervorsteht.

6. Maschine nach Anspruch 1, **dadurch gekennzeichnet, daß** der Trichter auf die Scheibe unter Zwischenschaltung eines Rütteltisches (14) ablädt, welcher mit parallelen und beabstandeten Elementen realisiert ist, die parallel zur Förderrichtung der Lutscher auf dem Tisch und mit einem Abstand, der größer als die Dicke des Stiels aber kleiner als der Durchmesser des Tropfens in einer solchen Weise ist, angeordnet sind, daß Stiele ohne einen Tropfen durch den Rütteltisch (14) hindurchfallen und zurückgewiesen werden.

7. Maschine nach Anspruch 1, **dadurch gekennzeichnet, daß** die Lutscher auf die Scheibe in zwei unterschiedliche Zonen (19, 20) abgeladen werden, die voneinander beabstandet sind.

8. Maschine nach Anspruch 7, **dadurch gekennzeichnet, daß** in den zwei Zonen (19, 20) Sensoren (25, 26) angeordnet sind, welche das Vorhandensein von Lutschern detektieren, und daß die Maschine Mittel zum Anpassen der Menge von Lutschern aufweist, welche in die Zonen eingespeist werden, um die Menge über einem vorbestimmten Minimum zu halten.

9. Maschine nach Anspruch 8, **dadurch gekennzeichnet, daß** die Lutscher die erste Zone (19) mittels einer Fördereinrichtung erreichen, welche in der Nähe der ersten Zone endet, und die zweite Zone (20) mittels einer Seitenöffnung in der Fördereinrichtung erreichen, und daß die Anpassungsmittel eine Zunahme in der Schwingung des Trichters, so daß eine größere Anzahl von Lutschern das Ende der Fördereinrichtung erreicht, und eine Luftblasvorrichtung (27) umfassen, welche die Lutscher auf die Fördereinrichtung verschiebt, um diese aus der Seitenöffnung fallen zu lassen.

## Revendications

1. Machine (10) pour acheminer dans une rangée ordonnée des produits se composant de sucettes à bonbon à une machine de conditionnement comprenant une trémie (13) déversant les produits sur un disque rotatif (18) ayant des cavités (23) agencées radialement, espacées les unes des autres pour recevoir le bonbon d'une sucette et avec une ouverture radiale (24) pour recevoir et provoquer la projection vers l'extérieur des bâtonnets des sucettes dans les cavités (23), **caractérisée en ce que** des guides (36, 37) pour le support à déplacement des sucettes au moyen du bâtonnet sont disposés sur l'extérieur du disque entre des zones d'insertion des sucettes dans les cavités et une zone de sortie, et **en ce que** les cavités (23) sont ouvertes en dessous, de sorte que les sucettes sans bâtonnets tombent à partir de la cavité respective (23) pour la libérer et sont rejetées avant d'atteindre la zone de sortie.

2. Machine selon la revendication 1, **caractérisée en ce que**, avant la zone de sortie, il y a un capteur (38) qui détecte le manque de sucettes dans une cavité et commande la rotation du disque pour rattraper la position vide et maintenir la fréquence de sortie de produit constante.

3. Machine selon la revendication 1, **caractérisée en ce que**, dans la zone de sortie, les guides libèrent les bâtonnets et les sucettes tombent de façon ordonnée et séquentiellement sur un transporteur (11) qui abandonne le disque radialement pour transporter les sucettes à la machine de conditionnement.

4. Machine selon la revendication 3, **caractérisée en ce que** le transporteur comprend des poussoirs espacés (40) conçus pour reposer à partir de l'arrière contre le bonbon d'une sucette déposée sur le transporteur avec le bâtonnet en avant.

5. Machine selon la revendication 1, **caractérisée en ce que** le disque rotatif (18) fait saillie radialement à partir d'un disque incurvé (17), disposé au-dessus et tournant dans le sens opposé.

6. Machine selon la revendication 1, **caractérisée en ce que** la trémie déverse sur le disque avec interposition d'une table vibrante (14), réalisée avec des éléments parallèles et espacés, disposés parallèlement à la direction d'acheminement des sucettes sur la table et avec une distance supérieure à l'épaisseur du bâtonnet, mais inférieure au diamètre du bonbon, de telle sorte que les bâtonnets sans un bonbon tombent au travers de la table vibrante (14) et sont rejetés.

7. Machine selon la revendication 1, **caractérisée en ce que** les sucettes sont déversées sur le disque dans deux zones différentes (19, 20) espacées l'une de l'autre.

8. Machine selon la revendication 7, **caractérisée en ce que** dans les deux zones (19, 20), il y a des capteurs (25, 26) qui détectent la présence de sucettes et la machine comprend un moyen de réglage de la quantité de sucettes amenées dans lesdites zones pour maintenir ladite quantité au-dessus d'un minimum prédéterminé.

9. Machine selon la revendication 8, **caractérisée en ce que** les sucettes atteignent la première zone (19) au moyen d'un transporteur qui se termine près de ladite première zone, atteignent la deuxième zone (20) au moyen d'une ouverture latérale dans ledit transporteur et les moyens de réglage comprennent une augmentation de la vibration de la trémie afin qu'un plus grand nombre de sucettes atteigne l'extrémité du transporteur et un dispositif d'insufflation d'air (27) qui dévie les sucettes sur le transporteur pour qu'elles tombent à partir de ladite ouverture latérale.
